# EUROPEAN PATENT APPLICATION

(11) **EP 1 716 750 A1**
(43) Date of publication of application: **02.11.2006**
(21) Application number: 06380053.6
(22) Date of filing: 21.03.2006
(51) Int. Cl.: A01K 5/02

(54) **A livestock feeding assembly**

(30) Priority: 29.04.2005 ES 200500968 U
(71) Applicant: Tecnica e Innovaciones Ganaderas, S.A., 08720 Vilafranca del Penedes (Barcelona) (ES)
(72) Inventor: Rovira Badia, Antonio Tecnica e Innov. Ganaderas, 08720 Vilafranca del Penedes Barcelona (ES)
(74) Representative: Pastells Teixido, Manuel

(57) **Abstract**

This assembly comprises a hopper (1) and a manger (2) being fitted together by means of a framework (3), the hopper (1) comprising means for adjusting the quantity of dry feed to be supplied, the framework (3) having means for supplying water to the manger (2); a characterising feature lying in the fact that the means being provided for adjusting the quantity of dry feed comprise a disk (8) being fixedly fitted around the axial member (9) being linked to the control (10) being arranged outside the hopper (1), said axial member (9) inferiorly projecting from a tube (11) being fixedly and coaxially fitted to the open bottom (13) of the hopper (1), said disk (8) being applicable against said open bottom. An also characterising feature lies in the presence of a feed stirring piece (22) being fitted to the axial member (9) on top of the disk (8).

## Description

### FIELD OF THE INVENTION

This assembly is particularly applicable for the feeding of pigs.

### BACKGROUND OF THE INVENTION

Livestock feeding assemblies are already known which comprise a hopper from which the feed falls by gravity onto a manger, the hopper and manger being fitted together by means of a framework being also fitted with means being provided for supplying water to the manger, the hopper comprising means being operable to adjust the quantity of feed to be supplied.

An assembly having these features is the object of Patent ES-2167266 (P00002251) being owned by the very applicant for this new Patent. In the aforementioned patent several improvements to this kind of assemblies were being claimed and included among them a special makeup for the manger, the means being provided for adjusting the dry feed quantity, a vertical pipe being guidedly arranged below the hopper and held by an axial rod being upperly linked to a control being arranged outside the hopper by means of its pin-jointed connection to a swingable, transversal holder at a portion being linked to a transversal shaft being solidly fitted to said external control.

### SUMMARY OF THE INVENTION

It is the object of this invention to improve this type of livestock feeding assemblies, i.e. mainly the feed supply adjusting means corresponding to said Patent ES-2167266 (P00002251) by simplifying them in order to thus reduce their cost, said means being thus made more amenable to the action being exerted by the animal and also allowing to achieve a perfect closure when wishing to stop the feed supply.

In order to achieve said improvements a characterising feature lies in the fact that the adjusting means comprise a disk being fixedly fitted around the axial member being linked to the control being arranged outside the hopper, said axial member inferiorly projecting from a tube being fixedly and coaxially fitted to the open bottom of the hopper, said disk being applicable against said open bottom.

In order to facilitate the action to be exerted by the animal on said feed supply means a sleeve is fixedly fitted to the lower end of the axial member and thus brings about an increase of the diameter of said lower end.

It will be understood that the adjusting means being included in the hopper can be commercialised with mangers and frameworks having different features as compared with those being used in the aforementioned patent.

These and other features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:
Fig. 1 illustrates in a sectional elevation the livestock feeding assembly;
Fig. 2 represents a sectional, perspective view of the lower portion of the feed supply means;
Fig. 3 is an exploded, perspective view showing said lower portion being a characterising feature of the feed supply means; and

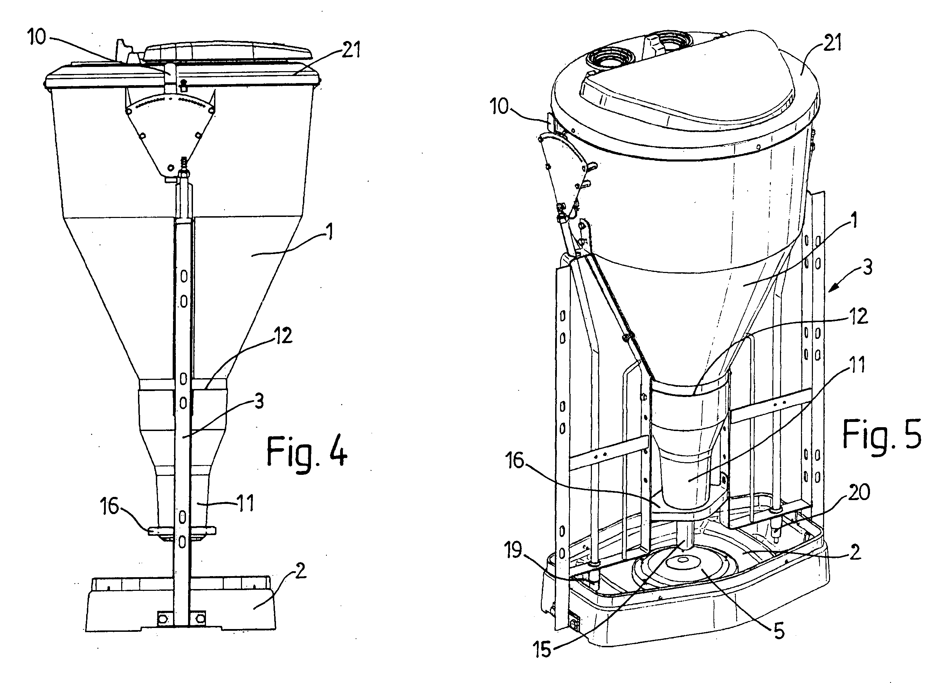

Figs. 4 and 5 respectively correspond to a side elevation and a perspective view of the livestock feeding assembly.

### DETAILED DESCRIPTION

According to the drawings this livestock feeding assembly being mainly provided for the feeding of pigs comprises a hopper (1) and a manger (2) being fitted together by means of a framework (3).

The manger is divided into a central region (4) having a centrally located, raised portion (5) being reinforced with a rustproof protection, and two lateral regions (6) and (7), said regions being respectively designed for the purpose of receiving the dry feed or fodder in the case of the central one, and of receiving the water in the case of the two lateral ones.

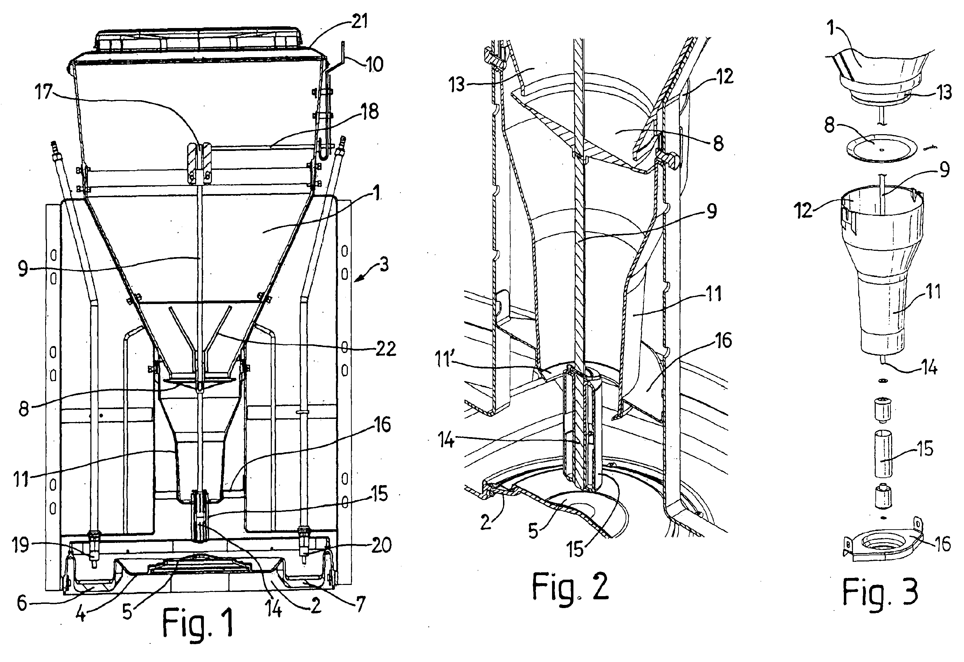

The means being provided for adjusting the quantity of dry feed to be supplied to the manger (2), namely onto its centrally located, raised portion (5), comprise a disk (8) being fixedly fitted around the axial member (9) being made up by a flatbar, this latter being at its upper end linked to the external control (10), said axial member inferiorly projecting from a two-diameter tube (11) having its open top (12) coaxially fitted to the open bottom (13) (Figs. 2 and 3) of the hopper (1), the disk (8) being applicable against said open bottom when wishing to stop the feed supply.

The lower end (14) of the axial member has a sleeve (15) fixedly fitted to it, the animal laterally pushing said sleeve and generally using its snout for such a purpose, the disk (8) being thus tilted and hence dropping the feed or fodder having accumulated on it while the motion is at the same time being restricted.

At the open bottom of the tube (11) a reduction of its diameter has been provided in order to restrict the lateral shift of the axial member (9) when this latter is being pushed by the animal. This restriction serves the purpose of preventing the disk (8) from assuming a markedly tilted position possibly causing it to be forced out of its proper arrangement. In the case being shown said diameter reduction consists in a slightly conical edge (11') forming an inner, peripheral flange (Fig. 2) at the open bottom of the tube (11).

A flange (16) is fixedly fitted to the framework (3) and is used for the purpose of securing and centring the lower portion of the tube (11).

By adjusting the clearance of the disk (8) with respect to the open bottom (13) of the hopper (1) a bigger or smaller quantity of feed will be dropped upon the actuation of the lower end of the axial member (9).

Said adjustment is achieved with the mechanism being provided with an external control and already existing in the aforementioned patent ES-2167266 (P00002251) and comprising the pin-jointedly linked connection of the upper end of the axial member (9) to a holder (17) being linked to a transversal shaft (18) being solidly rotatable with the external control (10).

Numerals (19) and (20) denote the valve nozzles corresponding to the water supply means and numeral (21) stands for a lid being fit to be fitted to the open top of the hopper (1), said lid having openings for the charging of the dry feed.

A piece (22) can be optionally included in this hopper in order to stir the feed so that it does not get compacted, and for such a purpose said piece would be fitted around the axial member (9) from above the disk (8) upon which it would come to rest.

## Claims

1. A livestock feeding assembly comprising a hopper (1) and a manger (2) being fitted together by means of a framework (3), the hopper (1) comprising means for adjusting the quantity of dry feed to be supplied, the framework (3) having means for supplying water to the manger (2); **characterised in that** the means being provided for adjusting the quantity of dry feed comprise a disk (8) being fixedly fitted around the axial member (9) being linked to the control (10) being provided for controlling said means and arranged outside the hopper (1), said axial member (9) inferiorly projecting from a tube (11) being fixedly and coaxially fitted to the open bottom (13) of the hopper (1), said disk (8) being applicable against said open bottom.

2. A livestock feeding assembly as per claim 1, **characterised in that** the lower end (14) of said axial member (9) has a sleeve (15) fixedly fitted to it, the animal laterally pushing said sleeve, the disk (8) being thus tilted and hence dropping the feed while the motion is at the same time being restricted.

3. A livestock feeding assembly as per claim 1, **characterised in that** a piece (22) being provided for stirring the feed is fitted to the axial member (9) on top of the disk (8).

4. A livestock feeding assembly as per claim 1, **characterised in that** at the open bottom of the tube (11) being fixedly fitted to the hopper (1) a diameter reduction has been provided which serves the purpose of restricting the lateral shift of the axial member (9).
